(19) Europäisches Patentamt
European Patent Office
Office européen des brevets

(11) EP 0 950 698 A1

# (12) EUROPÄISCHE PATENTANMELDUNG

(43) Veröffentlichungstag:
**20.10.1999 Patentblatt 1999/42**

(21) Anmeldenummer: **99107507.8**

(22) Anmeldetag: **14.04.1999**

(51) Int. Cl.[6]: **C09J 133/06**, C09J 135/00, C08K 5/00, B32B 7/12

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **15.04.1998 DE 19816742**

(71) Anmelder:
**BASF AKTIENGESELLSCHAFT
67056 Ludwigshafen (DE)**

(72) Erfinder:
- **Dames, Burkhardt
67069 Ludwigshafen (DE)**
- **Schumacher, Karl-Heinz
67433 Neustadt (DE)**
- **Fricke, Hans-Joachim
67246 Dirmstein (DE)**

(74) Vertreter:
**Kinzebach, Werner, Dr. et al
Reitstötter, Kinzebach & Partner,
Postfach 21 11 60
67011 Ludwigshafen (DE)**

## (54) Verwendung wässriger Zubereitungen als Kaschierklebstoffe

(57) Die vorliegende Erfindung betrifft die Verwendung von wässrigen Zubereitungen, die wenigstens ein dispergiertes Polymer P1 enthalten, das aus ethylenisch ungesättigten Monomeren M aufgebaut ist, wobei die Monomere M

0,1 bis 20 Gew.-% wenigstens eines Monomers M1, ausgewählt unter den Anhydriden monoethylenisch ungesättigter Monocarbonsäuren mit 3 bis 8 C-Atomen und Itaconsäureanhydrid,

80 bis 99,9 Gew.-% wenigstens eines hydrophoben Monomers M2 mit einer Wasserlöslichkeit < 60 g/l (bei 25 °C und 1 bar) und gegebenenfalls

0 bis 19,9 Gew.-% eines oder mehrerer Monomere M3 mit einer Wasserlöslichkeit > 60 g/l (bei 25 °C und 1 bar)

umfassen und wobei die Anteile der Monomere M1 bis M3 auf 100 Gew.-% Monomere M bezogen sind, als Klebstoffe für die Herstellung von Laminaten.

Die vorliegende Erfindung betrifft auch ein Verfahren zur Herstellung von Laminaten durch Verkleben von großflächigen Substraten mit einer erfindungsgemäßen Zubereitung als Klebstoff sowie die nach diesem Verfahren erhältlichen Laminate.



Printed by Xerox (UK) Business Services
2.16.7/3.6

**Beschreibung**

Die vorliegende Erfindung betrifft die Verwendung von wässrigen Zubereitungen, die wenigstens ein dispergiertes Polymer P1 enthalten, das aus ethylenisch ungesättigten Monomeren M aufgebaut ist, als Klebstoffe für die Herstellung von Laminaten.

Die Verwendung von wäßrigen Polymerdispersionen als Klebstoffe für die Herstellung von Laminaten ist dem Fachmann bekannt. Gegenüber lösungsmittelhaltigen Klebstoffen bieten sie den Vorteil, daß Lösemittelabfälle und -emissionen grundsätzlich vermieden werden können.

An Klebstoffe für die Herstellung von Laminaten, die auch als Kaschierklebstoffe bezeichnet werden, stellt man in der Praxis eine Vielzahl von unterschiedlichen Anforderungen. Z.B. ist gewünscht, daß Kaschierklebstoffe universell einsetzbar sind, d.h. sie sollen sich gleichermaßen für die Verklebung von unterschiedlichen Polymerfolien, z.B. aus Polyethylen (PE), orientiertem Propylen (OPP), Polyamid (PA) oder Polyethylenterephthalat (PETP) miteinander, mit Aluminiumfolien oder metallisierten Polymerfolien und insbesondere auch für Verklebung von Polymerfolien mit Papier eignen.

Die Kaschierklebstoffe sollen zu Substraten eine gute Haftung aufweisen und nach der Kaschierung eine hohe Festigkeit der erhaltenen Laminate (Folienverbunde) bewirken. Die Haftung der verklebten Folien soll sich auch bei Alterung der Laminate nicht wesentlich verschlechtern. Auch bei mechanischer Belastung, wie sie beim Nuten von Laminaten auftritt, darf ein Ablösen der miteinander verklebten Substrate nicht auftreten. Da die Folienverbunde oft transparent sind, müssen die Kaschierklebstoffe auch frei sein von feinem Koagulat sowie alterungs-, lichtbeständig und schaumarm sein. Die Verarbeitung in den Kaschieranlagen setzt eine hohe Scherstabilität der Dispersionen und gute Fließeigenschaften voraus.

Die bisher im Handel erhältlichen wäßrigen Polymerdispersionen erfüllen die an Kaschierklebstoffe gestellten Anforderungen noch nicht in ausreichendem Maße. Insbesondere die Haftungs- und Nutungseigenschaften der Laminate lassen zu wünschen übrig.

Aus der EP-A 148 386 ist bekannt, die Haftung von Klebstoffschichten auf Polyolefinoberflächen, die durch Coronaentladung vorbehandelt wurden, durch Behandlung mit Dihydraziden von Dicarbonsäuren zu verbessern.

Aus der WO 92/12213 und der EP-A 622 434 sind Kaschierklebstoffe auf Basis wässriger Polymerisatdispersionen bekannt, die sowohl wenigstens eine ethylenisch ungesättigte Carbonsäure und wenigstens eine ethylenisch ungesättigte Sulfonsäure einpolyemrisiert enthalten. Aufgrund der Säurekombination führen derartige Klebstoffe zu stabileren Verklebungen. Ethylenisch ungesättigte Sulfonsäuren sind jedoch vergleichsweise teuer und weisen in vielen Ländern keine lebensmittelrechtliche Zulassung auf, so daß ein Ersatz dieser Monomere in Polymeren für Kaschierklebstoffe wünschenswert ist.

Der vorliegenden Erfindung liegt daher die Aufgabe zugrunde, Klebstoffe auf der Basis wässriger Polymerdispersionen bereitzustellen, die zu stabileren Verklebungen mit verbesserten Nutungseigenschaften der Laminate führen, ohne daß ein Einsatz ethylenisch ungesättigter Sulfonsäuren erforderlich ist.

Es wurde nun überraschenderweise gefunden, daß die Verwendung wässriger Polymerdispersionen, die Anhydride ethylenisch ungesättigter Carbonsäuren einpolymerisiert enthalten, zu Laminaten führt, die sich durch eine stabilere Verklebung auszeichnen, d.h. eine verbesserte Haftung der verklebten Substrate und bessere Nutungseigenschaften aufweisen.

Demnach betrifft die vorliegende Erfindung die Verwendung von wässrigen Zubereitungen, die wenigstens ein dispergiertes Polymer P1 enthalten, das aus ethylenisch ungesättigten Monomeren M aufgebaut ist, wobei die Monomere M

i) 0,1 bis 20 Gew.-% wenigstens eines Monomers M1, ausgewählt unter den Anhydriden monoethylenisch ungesättigter Monocarbonsäure mit 3 bis 8 C-Atomen und Itaconsäureanhydrid,

ii) 80 bis 99,9 Gew.-% wenigstens eines hydrophoben Monomers M2 mit einer Wasserlöslichkeit < 60 g/l (bei 25 °C und 1 bar) und gegebenenfalls

iii) 0 bis 19,9 Gew.-% eines oder mehrerer Monomere M3 mit einer Wasserlöslichkeit > 60 g/l (bei 25 °C und 1 bar)

umfassen und wobei die Anteile der Monomere M1 bis M3 auf 100 Gew. -% Monomere M bezogen sind, als Klebstoffe für die Herstellung von Laminaten.

Bevorzugte Monomere M1 sind Methacrylsäureanhydrid, Acrylsäureanhydrid und Itaconsäureanhydrid. Besonders bevorzugtes Monomer M1 ist Methacrylsäureanhydrid. Der Anteil der Monomere M1 an der Gesamtmenge der zu polymerisierenden Monomere M liegt vorzugsweise im Bereich von 0,2 bis 12 Gew.-% und besonders bevorzugt im Bereich von 0,5 bis 10 Gew.-%.

Typische Monomere M2 sind hydrophobe Monomere mit einer begrenzten Wasserlöslichkeit (d. h. < 60 g/l bei

25 °C), wie sie üblicherweise für die radikalische, wässrige Emulsionspolymerisation eingesetzt werden. Typische Monomere M2 sind ausgewählt unter vinylaromatischen Monomeren wie Styrol, α-Methylstyrol, ortho-Chlorstyrol oder Vinyltoluole, Vinylestern von $C_1$-$C_{18}$-, vorzugsweise $C_1$-$C_{12}$-Monocarbonsäuren, wie Vinylacetat, Vinylpropionat, Vinylbutyrat, Vinylvalerat, Vinylhexanoat, Vinyl-2-ethylhexanoat, Vinyldecanoat, Vinyllaurat, Vinylstearat und Vinylester der Versatic®-Säuren (Versatic®-Säuren sind verzweigte, aliphatische Carbonsäuren mit 5 bis 11 C-Atomen). Typische Monomere M2 sind weiterhin die Ester α,β-ethylenisch ungesättigter $C_3$-$C_8$-Mono- oder Dicarbonsäuren mit vorzugsweise $C_1$-$C_{12}$- und insbesondere $C_1$-$C_8$-Alkanolen oder $C_5$-$C_8$-Cycloalkanolen. Geeignete $C_1$-$C_{12}$-Alkanole sind beispielsweise Methanol, Ethanol, n-Propanol, i-Propanol, 1-Butanol, 2-Butanol, Isobutanol, tert.-Butanol, n-Hexanol und 2-Ethylhexanol. Geeignete Cycloalkanole sind beispielsweise Cyclopentanol oder Cyclohexanol. Beispiele hierfür sind Ester der Acrylsäure, der Methacrylsäure, der Crotonsäure, der Maleinsäure, der Itaconsäure oder der Fumarsäure wie (Meth)acrylsäuremethylester, (Meth)acrylsäureethylester, (Meth)acrylsäureisopropylester, (Meth)acrylsäure-n-butylester, (Meth)acrylsäureisobutylester, (Meth)acrylsäure-1-hexylester, (Meth)acrylsäure-tert.-butylester, (Meth)acrylsäure-2-ethylhexylester, Maleinsäuredimethylester oder Maleinsäuredi-n-butylester. Darüber hinaus können auch $C_4$-$C_8$-konjugierte Diene wie 1,3-Butadien, Isopren oder Chloropren, $C_2$-$C_6$-Olefine wie Ethylen, Propen, 1-Buten und Isobuten, oder Vinylchlorid als Monomere M2 eingesetzt werden. Die genannten Monomere M2 machen in der Regel 80 bis 99,9 Gew.-%, vorzugsweise 88 bis 99,8 Gew.-% und speziell 90 bis 99,5 Gew.-%, bezogen auf das Gesamtgewicht der eingesetzten Monomere, aus.

Bevorzugte Monomere M2 sind die vorgenannten vinylaromatischen Monomere sowie die Ester der Acrylsäure und der Methacrylsäure mit $C_1$-$C_{12}$-Alkanolen und Kombinationen dieser Monomere. Bevorzugte Monomere M2 sind auch die Vinylester aliphatischer $C_1$-$C_{12}$-Carbonsäuren insbesondere Vinylacetat oder Vinylpropionat. Bevorzugt sind auch Monomermischungen aus Vinylacetat oder Vinylpropionat mit Ethylen und/oder Vinylchlorid.

In einer besonders bevorzugten Ausführungsform der vorliegenden Erfindung umfassen die Monomere M2 wenigstens zwei voneinander verschiedene Monomere M2a und M2b. Die Monomere M2a sind vorzugsweise ausgewählt unter den vorgenannten vinylaromatischen Monomeren insbesondere Styrol und den Estern der Methacrylsäure mit $C_1$-$C_{12}$-Alkanolen, insbesondere Methylmethacrylat und n-Butylmethacrylat. Die Monomere M2b sind vorzugsweise ausgewählt unter den Estern der Acrylsäure mit $C_1$-$C_{12}$-Alkanolen, insbesondere Ethyhlacrylat, n-Butylacrylat und 2-Ethylhexylacrylat.

Ferner kann das Copolymer P auch von den Monomeren M1 und M2 verschiedene Monomere M3 in einpolymerisierter Form enthalten, die eine erhöhte Wasserlöslichkeit, d. h. > 60 g/l bei 25 °C und 1 bar aufweisen. Diese Monomere werden in der Regel in Mengen bis 19,9 Gew.-%, vorzugsweise in Mengen von 0,1 bis 10 Gew.-% und insbesondere 0,5 bis 5 Gew.-%, bezogen auf die Gesamtmonomermenge, mit einpolymerisiert. Derartige Monomere erhöhen die Stabilität der als Bindemittel eingesetzten Polymerisatdispersionen. Zu den Monomeren M3 zählen Monomere M3a, die saure Gruppen enthalten, z.B. α,β-monoethylenische ungesättigte Mono- und Dicarbonsäuren mit 3 bis 10 C-Atomen sowie ethylenisch ungesättigte Sulfonsäuren, Phosphonsäuren oder Dihydrogenphosphate und deren wasserlösliche Salze. Bevorzugte Monomere M3a sind ethylenisch ungesättigten $C_3$-$C_8$-Carbonsäuren und $C_4$-$C_8$-Dicarbonsäuren, z. B. Itaconsäure, Crotonsäure, Vinylessigsäure, Acrylamidoglykolsäure und insbesondere Acrylsäure und Methacrylsäure. Die Monomere M3 umfassen auch neutrale bzw. nichtionische, modifizierende Monomere M3b, z. B. die Amide oder die N-Alkylolamide der genannten Carbonsäuren, beispielsweise Acrylamid, Methacrylamid, N-Methylolacrylamid und N-Methylolmethacrylamid, die Hydroxyalkylester der vorgenannten ethylenisch ungesättigten Carbonsäuren wie Hydroxyethylacrylat, Hydroxyethylmethacrylat, Hydroxypropylacrylat und Hydroxypropylmethacrylat. Weiterhin kommen als Monomere M3b Nitrile α,β-monoethylenisch ungesättigter $C_3$-$C_8$-Carbonsäuren, wie Acrylnitril oder Methacrylnitril in Betracht.

In einer besonders bevorzugten Ausführungsform der vorliegenden Erfindung ist das Polymer P1 aufgebaut aus:

i) 0 bis 39,8 Gew.-%, insbesondere 5 bis 29,6 Gew.-%, Monomeren M2a, insbesondere Styrol und/oder Methylmethacrylat,

ii) 60 bis 99,8 Gew.-%, insbesondere 70 bis 94,6 Gew.-%, Monomeren M2b, insbesondere n-Butylacrylat und/oder 2-Ethylhexylacrylat,

iii) 0,1 bis 20 Gew.-%, vorzugsweise 0,2 bis 10 Gew.-%, wenigstens eines Monomers M1, insbesondere Methacrylsäureanhydrid und

iv) 0,1 bis 5 Gew.-%, vorzugsweise 0,2 bis 3 Gew.-% Monomeren M3, insbesondere einer ethylenisch ungesättigten Carbonsäure, und besonders bevorzugt Acrylsäure oder Methacrylsäure,

wobei sich die Gewichtsteile der Monomere M1, M2a, M2b und M3 zu 100 Gew.-% addieren.

Weiterhin kann das Polymer P1 vernetzende Monomere M4 einpolymerisiert enthalten. Diese werden, sofern erwünscht, in untergeordneter Menge, d. h. in Mengen von 0,01 bis 2 Gew.-% bezogen auf die Gesamtmonomermenge, verwendet. Hierbei handelt es sich vorzugsweise um Monomere, die zwei nicht-konjugierte, ethylenisch ungesättigte Bindungen aufweisen, z. B. die Diester zweiwertiger Alkohole mit $\alpha,\beta$-monoethylenisch ungesättigten $C_3$-$C_8$-Carbonsäuren, z. B. Glykolbisacrylat oder Ester von $\alpha,\beta$-ungesättigten Carbonsäuren mit Alkenolen, z. B. Bicyclodecenyl(meth)acrylat, ferner Divinylbenzol, N,N'-Divinylharnstoff, N,N'-Divinylimidazolinon, Diallylphthalat etc. In einer bevorzugten Ausführungsform enthält das Polymerisat P keine Monomere M4 einpolymerisiert.

Ferner können die Polymere P1 auch bifunktionelle Monomere M5 aufweisen, den neben einer ethylenisch ungesättigten Doppelbindung wenigstens eine Glycidyl- oder Carbonylgruppe aufweisen. Beipiele für Monomere M5 sind ethylenisch ungesättigte Glycidylether und -ester, z.B. Vinyl-, Allyl- und Methallylglycidylether, Glycidylacrylat und -methacrylat, die Diacetonylamide der obengenannten ethylenisch ungesättigten Carbonsäuren, z.B. Diaceton(meth)acrylamid, und die Ester der Acetylessigsäure mit den obengenannten Hydroxyalkylestern ethylenisch ungesättigter Carbonsäuren, z. B. Acetylacetoxyethyl(meth)acrylat. Die Monomere M5 werden üblicherweise, sofern erwünscht, in Mengen von 0,05 bis 10 Gew.-%, insbesondere in Mengen von 0,1 bis 5 Gew.-%, bezogen auf die Gesamtmonomermenge, eingesetzt.

Die Glasübergangstemperatur der Polymere P1 liegt üblicherweise im Bereich von -60 °C bis +40 °C, vorzugsweise im Bereich von -50 °C bis +30 °C, insbesondere im Bereich von -40 °C bis +20 °C und speziell im Bereich von -30 °C bis +10 °C. Hierbei erweist es sich als hilfreich, die Glasübergangstemperatur $T_g$ des dispergierten Polymerisats abzuschätzen. Nach Fox (T.G. Fox, Bull. Am. Phys. Soc. (Ser. II) 1, 123 [1956] und Ullmanns Enzyklopädie der technischen Chemie, Weinheim (1980), S. 17, 18) gilt für die Glasübergangstemperatur von Mischpolymerisaten bei großen Molmassen in guter Näherung

$$\frac{1}{T_g} = \frac{X^1}{T_g^{\,1}} + \frac{X^2}{T_g^{\,2}} + \cdot\cdot\cdot\cdot\cdot \frac{X^n}{T_g^{\,n}}$$

wobei $X^1, X^2, ..., X^n$ die Massenbrüche der Monomeren 1, 2, ..., n und $T_g^{\,1}, T_g^{\,2}, ..., T_g^{\,n}$ die Glasübergangstemperaturen der jeweils nur aus einem der Monomeren 1, 2, ..., n aufgebauten Polymeren in Grad Kelvin bedeuten. Letztere sind z. B. aus Ullmann's Encyclopedia of Industrial Chemistry, VCH, Weinheim, Vol. A 21 (1992) S. 169 oder aus J. Brandrup, E.H. Immergut, Polymer Handbook 3rd ed, J. Wiley, New York 1989 bekannt.

Weiterhin hat es sich als vorteilhaft erwiesen, wenn die Polymerisatteilchen des Copolymers P einen mittleren Polymerisatteilchendurchmesser im Bereich von 50 bis 1 000 nm aufweisen (bestimmt mittels Ultrazentrifuge oder durch Photonenkorrelationsspektroskopie; zur Teilchengrößenbestimmung siehe W.Mächtle, Angew. Makromolekulare Chemie 1984, Bd. 185, 1025-1039, W.Mächtle ebenda, 1988, Bd. 162, 35-42). Bei Zubereitungen, mit hohen Feststoffgehalten, z. B. > 50 Gew.-%, bezogen auf das Gesamtgewicht der Zubereitung, ist es aus Gründen der Viskosität von Vorteil, wenn der gewichtsmittlere Teilchendurchmesser der Polymerisatteilchen in der Dispersion > 250 nm ist. Der mittlere Teilchendurchmesser wird vorzugsweise 600 nm nicht überschreiten. Maßnahmen zur Einstellung der Polymerteilchengröße sind dem Fachmann bekannt.

Die Herstellung der erfindungsgemäß zur Anwendung kommenden wässrigen Polymerisatdispersionen erfolgt vorzugsweise durch radikalische wässrige Emulsionspolymerisation der genannten Monomere in Gegenwart wenigstens eines radikalischen Polymerisationsinitiators und gegebenenfalls einer grenzflächenaktiven Substanz.

Als radikalische Polymerisationsinitiatoren kommen grundsätzlich sowohl Peroxide, z. B. Wasserstoffperoxid, organische Peroxide und Hydroperoxide wie tert.-Butylhydroperoxid, Alkalimetall- und Ammoniumperoxodisulfate als auch Azoverbindungen in Betracht. Bevorzugt werden Redoxinitiatorsysteme verwendet, die aus wenigstens einem organischen Reduktionsmittel und wenigstens einem Peroxid und/oder Hydroperoxid zusammengesetzt sind, z. B. tert.-Butylhydroperoxid und einer Schwefelverbindung, z.B. das Natriumsalz der Hydroxymethansulfinsäure, Natriumsulfit, Natriumdisulfit, Natriumthiosulfat oder Acetonbisulfit-Addukt, oder Wasserstoffperoxid mit Ascorbinsäure. Auch können für diesen Zweck Redoxinitiatorsysteme verwendet werden, die eine geringe Menge einer im Polymerisationsmedium löslichen Metallverbindung enthalten, deren metallische Komponente in mehreren Wertigkeitsstufen auftreten kann, z. B. Eisen(II)sulfat,Eisen(II)-EDTA-Komplex in Form des Natriumsalzes, Vanadiumsulfat und/oder Kupfer(II)-Salze. Ebenfalls bevorzugte Initiatoren sind Peroxodisulfate, wie Natriumperoxodisulfat oder Ammoniumperoxodisulfat. Vorzugsweise beträgt die Menge der eingesetzten radikalischen Initiatorsysteme, bezogen auf die Gesamtmenge der zu polymerisierenden Monomeren, 0,1 bis 2 Gew.-%.

Für die Durchführung der Emulsionspolymerisation geeignete grenzflächenaktive Substanzen sind die üblicherweise für diese Zwecke eingesetzten Schutzkolloide und Emulgatoren. Die grenzflächenaktiven Substanzen werden üblicherweise in Mengen bis zu 10 Gew.-%, vorzugsweise 0,1 bis 5 Gew.-% und insbesondere 0,5 bis 4 Gew.-%, bezogen auf die zu polymerisierenden Monomere eingesetzt.

Geeignete Schutzkolloide sind beispielsweise Polyvinylalkohole, Stärke- und Cellulosederivate oder Vinylpyrrolidon enthaltende Copolymerisate. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart 1961, S. 411-420. Auch Gemische aus Emulgatoren und/oder Schutzkolloiden können verwendet werden. Vorzugsweise werden als grenzflächenaktive Substanzen ausschließlich Emulgatoren eingesetzt, deren relative Molekulargewichte im Unterschied zu den Schutzkolloiden üblicherweise unter 2000 liegen. Sie können sowohl anionischer, kationischer als auch nichtionischer Natur sein.

Zu den anionischen Emulgatoren zählen Alkali- und Ammoniumsalze von Alkylsulfaten (Alkylrest: $C_8$-$C_{12}$), von Schwefelsäurehalbestern ethoxylierter Alkanole (EO-Grad: 2 bis 50, Alkylrest: $C_{12}$ bis $C_{18}$) und ethoxylierter Alkylphenole (EO-Grad: 3 bis 50, Alkylrest: $C_4$-$C_9$), von Alkylsulfonsäuren (Alkylrest: $C_{12}$-$C_{18}$) und von Alkylarylsulfonsäuren (Alkylrest: $C_9$ bis $C_{18}$). Zu den anionischen grenzflächenaktiven Substanzen zählen auch Mono- und Dialkylderivate von Sulfonylphenoxybenzolsulfonsäure-Salzen, insbesondere von deren Natrium-, Kalium- oder Calciumsalze. Die Alkylgruppen in diesen Verbindungen weisen in der Regel 6 bis 18 und insbesondere 6, 12 oder 16 C-Atome auf. Häufig werden technische Gemische verwendet, die einen Anteil von 50 bis 90 Gew. -% des monoalkylierten Produktes aufweisen. Diese Verbindungen sind allgemein bekannt, z. B. aus der US-A-4,269,749, und im Handel erhältlich, beispielsweise als Dowfax® 2A1 (Warenzeichen der Dow Chemical Company).

Geeignete nichtionische Emulgatoren sind araliphatische oder aliphatische nichtionische Emulgatoren, beispielsweise ethoxylierte Mono-, Di- und Trialkylphenole (EO-Grad: 3 bis 50, Alkylrest: $C_4$-$C_9$), Ethoxylate langkettiger Alkohole (EO-Grad: 3 bis 50, Alkylrest: $C_8$-$C_{36}$), sowie Polyethylenoxid/Polypropylenoxid-Blockcopolymere. Bevorzugt werden Ethoxylate langkettiger Alkanole (Alkylrest: $C_{10}$-$C_{22}$, mittlerer Ethoxylierungsgrad: 3 bis 50) und darunter besonders bevorzugt solche auf Basis von Oxoalkoholen und nativen Alkoholen mit einem linearen oder verzweigten $C_{12}$-$C_{18}$-Alkylrest und einem Ethoxilierungsgrad von 8 bis 50.

Weitere geeignete Emulgatoren finden sich in Houben-Weyl, Methoden der organischen Chemie, Band XIV/1, Makromolekulare Stoffe, Georg-Thieme-Verlag, Stuttgart, 1961, S. 192-208.

Bevorzugt werden anionische Emulgatoren oder Kombinationen aus wenigstens einem anionischen und einem nichtionischen Emulgator.

Bei der Polymerisation können Regler eingesetzt werden, z.B. in Mengen von 0,01 bis 1 Gew.-%, bezogen auf 100 Gew.-% der zu polymerisierenden Monomere, durch die die Molmasse verringert wird. Geeignet sind z.B. Verbindungen mit einer Thiolgruppe wie tert. Butylmercaptan, Thioglykolsäureethylhexylester, Mercaptoethanol, Mercaptopropyltrimethoxysilan oder tert. Dodecylmercaptan. Der Anteil dieser Regler kann im Falle der Verwendung als Klebstoff für die Verbundfolienkaschierung insbesondere 0,05 bis 0,8 Gew.-%, bevorzugt 0,1 bis 0,5 Gew.-%, bezogen auf 100 Gew.-% der zu polymerisierenden Monomeren, betragen. Im Falle der Verwendung als Klebstoff für die Glanzfolienkaschierung ist die Mitverwendung eines Reglers weniger bevorzugt.

Die Emulsionspolymerisation erfolgt in der Regel bei 30 bis 130°C, vorzugsweise 50 bis 90 °C. Das Polymerisationsmedium kann sowohl nur aus Wasser, als auch aus Mischungen aus Wasser und damit mischbaren Flüssigkeiten wie Methanol, Ethanol oder iso-Propanol bestehen. Vorzugsweise wird nur Wasser verwendet. Die Emulsionspolymerisation kann sowohl als Batchprozeß als auch in Form eines Zulaufverfahrens, einschließlich Stufen oder Gradientenfahrweise, durchgeführt werden. Bevorzugt ist das Zulaufverfahren, bei dem man die Monomeren in reiner oder in emulgierter Form kontinuierlich, stufenweise oder unter Überlagerung eines Konzentrationsgefälles unter Aufrechterhaltung der Polymerisation der Polymerisationszone zuführt. Die einzelnen Komponenten können dem Reaktor beim Zulaufverfahren von oben, von der Seite oder von unten durch den Reaktorboden zugegeben werden.

Bei der Polymerisation kann auch z.B. zur besseren Einstellung der Teilchengröße eine Polymersaat (wässriger Saatlatex) vorgelegt werden. Der Saatlatex weist in der Regel eine gewichtsmittlere Teilchengröße von 10 bis 200 nm und insbesondere 20 bis 100 nm auf. Seine konstituierenden Monomere sind beispielsweise Styrol, Methylmethacrylat, n-Butylacrylat und Mischungen davon.

Die Art und Weise, in der der Initiator im Verlauf der radikalischen wäßrigen Emulsionspolymerisation dem Polymerisationsgefäß zugegeben wird, ist dem Durchschnittsfachmann bekannt. Er kann sowohl vollständig in das Polymerisationsgefäß vorgelegt, als auch nach Maßgabe seines Verbrauchs im Verlauf der radikalischen wäßrigen Emulsionspolymerisation kontinuierlich oder stufenweise zugesetzt werden. Die Zugabe erfolgt vorzugsweise als wässrige Initiator-Lösung. Im einzelnen hängt dies in an sich dem Durchschnittsfachmann bekannter Weise sowohl von der chemischen Natur des Initiatorsystems als auch von der Polymerisationstemperatur ab.

Zur Entfernung der Restmonomere wird üblicherweise im Anschluß an die Polymerisation eine Desodorierung auf physikalischem Wege, z. B. durch Abdestillieren der flüchtigen Monomere mit Wasserdampf, oder auf chemischem Wege durchgeführt. Bei der chemischen Desodorierung wird nach Ende der eigentlichen Emulsionspolymerisation, d.h. nach einem Umsatz der Monomeren von mindestens 95 %, weiterer Initiator, z.B. ein Redoxinitiator zugesetzt.

Auf diesem Wege sind wässrige Dispersionen des Copolymeren P mit Polymergehalten bis zu 80 Gew.-%, bezogen auf das Gesamtgewicht der Dispersion, zugänglich. Aus praktischen Gründen werden vorzugsweise Dispersionen mit Polymergehalten im Bereich von 30 bis 70 Gew.-%, insbesondere 40 bis 65 Gew.-%, verwendet.

Neben den Polymeren P1 kann die wäßrige Zubereitung in einer Ausführungsform der Erfindung zusätzlich eine vernetzend wirkende Substanz A enthalten, die ausgewählt ist unter niedermolekularen Verbindungen V mit wenigstens zwei funktionellen Gruppen F pro Molekül und Polymeren VP mit mehreren funktionellen Gruppen F, wobei die funktionellen Gruppen F mit den Anhydridgruppen AH des Polymers P1 unter Bindungsbildung reagieren können. Derartige Zubereitungen sind ebenfalls Gegenstand der vorliegenden Erfindung. Beispiele für funktionelle Gruppen F sind primäre und sekundäre Aminogruppen, die vorzugsweise an $sp^3$-Kohlenstoffatome gebunden sind. Geeignete funktionelle Gruppen F sind weiterhin Hydroxylgruppen, die vorzugsweise an aliphatische Kohlenstoffatome oder an Siliciumatome gebunden sind.

Bevorzugte vernetzend wirkende Substanzen sind solche niedermolekulare Verbindungen V, die als reaktive funktionelle Gruppen F wenigstens eine primäre und/oder sekundäre Aminogruppe pro Molekül aufweisen.

Eine bevorzugte Variante dieser Ausführungsform betrifft die Verwendung von Zubereitungen, die als vernetzend wirkende Substanz wenigstens eine Verbindung V enthält, die wenigstens zwei primäre und/oder sekundäre Aminogruppen, insbesondere wenigstens zwei primäre Aminogruppen je Molekül aufweisen. Hierunter sind besonders solche Verbindungen bevorzugt, die in Wasser löslich sind.

Beispiele für Verbindungen mit wenigstens zwei primären oder sekundären Aminogruppen sind Verbindungen der allgemeinen Formel I

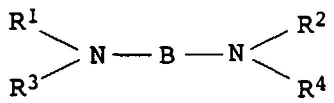

(I)

worin

| | |
|---|---|
| $R^1$, $R^2$, $R^3$ und $R^4$ | unabhängig voneinander für Wasserstoff oder für funktionelle Gruppen der allgemeinen Formel Alk-$NR^5R^6$ stehen, worin Alk für $C_1$-$C_4$-Alkylen steht und |
| $R^5$, $R^6$ | unabhängig voneinander für Wasserstoff oder eine funktionelle Gruppe Alk-$NR^7R^8$ stehen, worin $R^7$ und $R^8$ unabhängig voneinander eine der für $R^1$ bis $R^4$ angegebenen Bedeutungen besitzen, und |
| B | für $C_2$-$C_{24}$-Alkylen, das durch ein oder mehrere Sauerstoffatome, Cycloalkylengruppen oder Gruppen $NR^9$ unterbrochen oder durch ein oder mehrere Gruppen -Alk-$NR^5R^6$ substituiert sein kann, wobei $R^9$ eine der für $R^1$ bis $R^4$ angegebenen Bedeutungen aufweist, oder $C_1$-$C_{10}$-Alkyl bedeutet, für Arylen oder für einen Rest der Formel steht: |

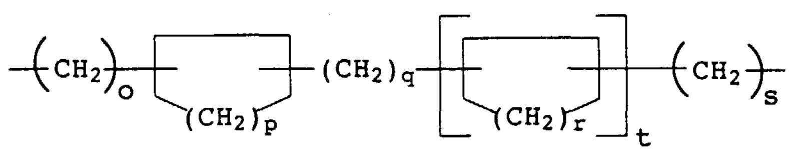

worin

o, q und s unabhängig voneinander für 0 oder eine ganze Zahl von 1 bis 6 stehen,
p und r unabhängig voneinander für 1 oder 2 stehen und
t für 0, 1 oder 2 steht, und
worin die cycloaliphatischen Reste auch durch 1, 2 oder 3 $C_1$-$C_{10}$-Alkylreste substituiert sein können.

In den Verbindungen der allgemeinen Formel I stehen naturgemäß wenigstens zwei Gruppen $NR^1R^3$, $NR^2R^4$, $NR^5R^6$, $NR^7R^8$ für eine primäre oder eine sekundäre Aminogruppe.

Hier und im Folgenden steht $C_1$-$C_{10}$-Alkyl für lineare oder verzweigte Alkylgruppen, die 1 bis 10 Kohlenstoffatome aufweisen und durch ein oder mehrere, nicht benachbarte Sauerstoffatome unterbrochen sein können. Beispiele für $C_1$-$C_{10}$-Alkyl sind Methyl, Ethyl, n- oder Isopropyl, n-Butyl, 2-Butyl, Isobutyl, n-Pentyl, n-Hexyl, n-Octyl, 2-Ethylhexyl und n-Decyl, ferner 3-Oxa-1-butyl, 3-Oxa-1-pentyl, 3-Oxa-1-hexyl, 4-Oxa-1-pentyl, 4-Oxa-1-hexyl, 5-Oxa-1-hexyl, 3,6-Dioxa-1-heptyl, 3,6-Dioxa-1-octyl, 4,8-Dioxa-1-nonyl, 3,6,9-Trioxa-1-decyl und 3,6,9-Trioxa-1-undecyl. $C_1$-$C_4$-Alkylen steht vorzugsweise für 1,2-Ethylen, 1,2-Propylen, 1,3-Propylen und 1,4-Butylen.

$C_2$-$C_{24}$-Alkylen steht für lineares oder verzweigtes Alkylen, das 2 bis 24 Kohlenstoffatome aufweist. Beispiele für $C_2$-$C_{24}$-Alkylen sind 1,2-Ethylen, 1,2- und 1,3-Propylen, 1,2-, 1,3- und 1,4-Butylen, 2-Methyl-1,3-propylen, 2,2-Dimethyl-1,3-propylen, 1,5-Pentylen, 2-Methyl-1,4-butylen, 1,6-Hexylen, 2-Methyl-1,6-hexylen, 2,2-Dimethyl-1,6-hexylen, 2,2,4-Trimethyl-1,6-hexylen, α,ω-Octylen, α,ω-Decylen, α,ω-Dodecylen. Beispiele für Alkylen, das durch Sauerstoffatome unterbrochen ist, sind: 3-Oxa-1,5-pentylen, 3,6-Dioxa-1,8-octylen, 3,6,9-Trioxa-1,11-undecylen, 4-Oxa-1,7-heptylen, 4,7-Dioxa-1,11-undecylen und 4,8,12-Trioxa-1,15-pentadecylen etc. Beispiele für Alkylen, das durch Gruppen $NR^9$ unterbrochen ist, sind 3-Imino-1,5-pentylen, 3,6-Bisimino-1,8-octylen, 3,6,9-Trisimino-1,1-undecylen, 4-Imino-1,7-heptylen etc.

Arylen steht beispielsweise für 1,2-, 1,3- oder 1,4-Phenylen, worin die Phenylgruppe gegebenenfalls 1 oder 2 $C_1$-$C_{10}$-Alkylgruppen oder ethoxiliertes -OH als Substituenten aufweist. Ferner umfasst Arylen auch Atomgruppen der folgenden Formel:

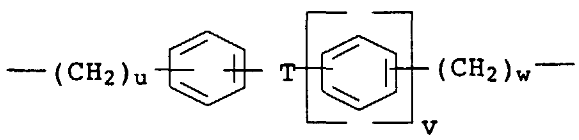

worin

| | |
|---|---|
| u und w | unabhängig voneinander für 0 oder 1 stehen, |
| v | = 0, 1 oder 2 ist, und |
| -T- | für eine Einfachbindung, lineares oder verzweigtes $C_1$-$C_4$-Alkylen oder für -O-, -S-, -S(O)-, -S(O)$_2$-, -C(O)-, -O-C(O)-, -NH-C(O)- oder -NH-C(O)-NH- steht. |

Beispiele für die bevorzugten Verbindungen der Formel I mit zwei primären Aminogruppen sind aliphatische oder cycloaliphatische Diamine wie 1,2-Ethylendiamin, 1,2- und 1,3-Diaminopropan, 1,3- und 1,5-Diaminopentan, 2-Methyl-1,5-diaminopentan, 2-Ethyl-2-butyl-1,5-diaminopentan, 2,2-Dimethyl-1,3-diaminopropan, 1,3-Diamino-2-methylpropan, 2-Methyl-1,6-diaminohexan, 3-Methyl-1,6-diaminohexan, 2,2,4-Trimethyl-1,6-diaminohexan, Isophorondiamin, Bis-(4-aminocyclohexyl)methan, Bis-(4-amino-3-methylcyclohexyl)methan und 2,2-Bis-(4-aminocyclohexyl)propan sowie aromatische Diamine, z. B. 1,2-, 1,3- und 1,4-Xylylendiamin, Bis-(4-aminophenyl)methan-sulfon, Bis-(4-aminophenyl)methan-sulfid, 2,2-Bis-(4-aminophenyl)propan und Bis-(4-aminophenyl)ether.

Aufgrund ihrer Wasserlöslichkeit besonders bevorzugte Verbindungen V sind Alkylendiamine mit 4 bis 20 C-Atomen, worin die Alkyleneinheit durch ein oder mehrere NH-Gruppen und/oder durch Sauerstoffatome unterbrochen ist, beispielsweise N-(2-Aminoethyl)-1,2-diaminoethan (= Diethylentriamin), N-(3-Aminopropyl)-1,2-diaminoethan, N,N'-Bis-(3-aminopropyl)ethylendiamin, Triethylentetramin, Tetraethylenpentamin, 1,5-Diamino-3,6,9-trioxaundecan, 1,10-Diamino-4,7-dioxadecan, 1,12-Diamino-4,9-dioxadodecan, 1,14-Diamino-4,11-dioxatetradecan und 1,13-Diamino-4,7,10-trioxatridecan, ferner Polyoxyalkylendiamine, die unter der Bezeichnung Jeffamine® von der Fa. Huntsman vertrieben werden, z. B. Jeffamine D-230, Jeffamine D-400, Jeffamine D-2000, Jeffamine D-4000, Jeffamine ED-600, Jeffamine ED-900, Jeffamine ED-2001 und Jeffamine EDR-148.

Die Verbindungen V der allgemeinen Formel I umfassen auch Verbindungen mit mehr als 2 Aminogruppen, z. B. 4-Amino-ethyl-1,8-diaminooctan, weiterhin sogenannte "Dendrimer"-Polyamine, die durch die allgemeinen Formeln Ia und Ib beschrieben werden können.

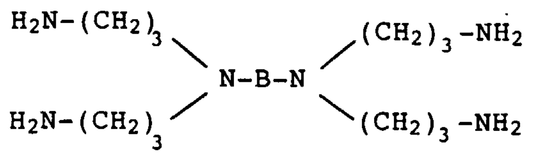

Ia

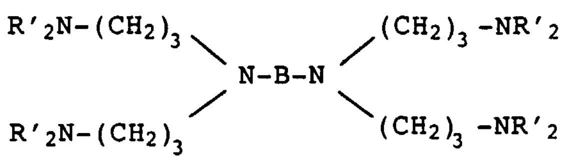

Ib

In den Formeln Ia und Ib weist B eine der oben für B in Formel I genannten Bedeutungen auf. In Formel Ib steht R' für $-CH_2-CH_2-CH_2-NH_2$, wobei ein Teil der Reste R' auch für Wasserstoff stehen kann. Dendrimer-Polyamine der allgemeinen Formel Ia sind ausgehend von aliphatischen oder cycloaliphatischen Diaminen, beispielsweise den oben genannten Diaminen und insbesondere 1,2-Ethylendiamin, durch Umsetzung mit bis zu 4 Mol Acrylnitril pro Mol Diaminoverbindung im Sinne einer Michael-Reaktion und anschließende, katalytische Hydrierung zugänglich. Ein Beispiel hierfür ist das hydrierte Addukt von 4 Mol Acrylnitril an Ethylendiamin. Hieraus resultiert ein Hexamin mit 4 primären Aminogruppen der allgemeinen Formel Ia, worin B für 1,2-Ethylen steht. Diese Verbindung wird auch als N-6-Amin bezeichnet. Das so erhältliche N-6-Amin kann nun seinerseits mit bis zu 8 mol Acrylnitril umgesetzt und anschließend erneut hydriert werden. Hieraus resultiert im Extremfall das N-14-Amin (Verbindung Ib, worin B für 1,2-Ethylen und alle Reste R' für 3-Aminopropyl stehen). Anstelle von Ethylendiamin können selbstverständlich auch andere aliphatische Diamine oder Triamine für die Dendrimer-Synthese eingesetzt werden. Die Herstellung der Dendrimer-Polyamine ist in der WO 93/14 147 beschrieben, auf die hier in vollem Umfang Bezug genommen wird.

Die erfindungsgemäßen Zubereitungen können als vernetzend wirkende Verbindung V auch Aminosiloxane der allgemeinen Formel II

$$R^aHN\text{-}X\text{-}Si(OR^b)_3 \qquad \text{(II)}$$

enthalten, worin

- $R^a$ für Wasserstoff, $C_1$-$C_{10}$-Alkyl, Aryl oder Aralkyl steht,
- $R^b$ $C_1$-$C_{10}$ Alkyl bedeutet und
- X für $C_2$-$C_{24}$-Alkylen, das durch ein oder mehrere Sauerstoffatome oder Gruppen $NR^c$ unterbrochen sein kann, worin $R^c$ Wasserstoff oder $C_1$-$C_{10}$-Alkyl bedeutet, oder für Arylen steht.

Bevorzugte Aminosiloxane der allgemeinen Formel II sind Verbindungen, worin $R^a$ für Wasserstoff steht. $R^b$ bedeutet vorzugsweise $C_1$-$C_4$-Alkyl und X steht vorzugsweise für $C_1$-$C_4$-Alkylen. Beispiele hierfür sind 3-Aminopropyltrimethoxisilan und 3-Aminopropyltriethoxisilan.

Ferner können als vernetzend wirkende Verbindung V auch Aminoalkohole eingesetzt werden. Unter Aminoalkoholen versteht man hier und im Folgenden Verbindungen, die wenigstens eine an ein $sp^3$-Kohlenstoffatom gebundene OH-Gruppe und wenigstens eine primäre oder sekundäre, vorzugsweise ebenfalls an ein $sp^3$-C-Atom gebundene Aminogruppe enthalten. Beispiele für geeignete Aminoalkohole sind 2-Aminoethanol, 2- oder 3-Aminopropanol, 2-(2-Aminoethoxy)ethanol, N-(2-Aminoethyl)ethanolamin, N-Methyl- und N-Ethylethanolamin, Diethanolamin und 3-(2-Hydroxyethylamino-)-1-propanol.

Die Verbindungen V umfassen auch niedermolekulare Diole, z.B. Alkylenglykole wie Ethylenglykol, 1,2-Propandiol, 1,4-Butandiol, 1,5-Pentandiol, 1,6-Hexandiol, Diethylenglykol, Triethylenglykol, Dipropylenglykol, Tripropylenglykol, Polyole wie Glycerin, Trimethylolpropan, Pentaerythrit, Dipentaerythrit oder ethoxilierte Derivate von Polyolen.

Die erfindungsgemäßen Zubereitungen können als vernetzend wirkende Substanz A anstelle oder zusammen mit den Verbindungen V, auch ein Polymer VP enthalten, das mehrere funktionelle Gruppen F aufweist. Die Unterscheidung zwischen Verbindungen V und Polymeren VP ist hierbei rein formaler Natur und bezieht sich auf das Molekulargewicht, wobei die Verbindungen V in der Regel ein Molekulargewicht < 800 und die Polymere VP in der Regel ein gewichtsmittleres Molekulargewicht $M_w$ > 800 aufweisen. Diese Grenze ist allerdings fließend. Vorzugsweise liegt das gewichtsmittlere Molekulargewicht $M_w$ der Polymere VP im Bereich von 1000 bis 50 000 Dalton.

Geeignete Polymere VP sind OH-Gruppen enthaltende Polymere, die vorzugsweise in Wasser löslich sind und ein Molekulargewicht im Bereich von 800 bis 50000 haben, z.B. Polyvinylalkohole, lösliche Cellulosen und Cellulosederivate, Stärke und modifizierte Stärken und alkoxylierte Zucker.

Bevorzugte Polymere VP sind aminogruppenhaltigen Polymere. Diese weisen in der Regel mehrere endständig und/oder seitenständig angeordnete, gegebenenfalls über $C_1$-$C_4$-Alkylen, z. B. Methylen, gebundene, primäre und/oder sekundäre Aminogruppen auf. Die Anzahl der Aminogruppen im Polymer liegt in der Regel im Bereich von 0,5 bis 20 mmol und vorzugsweise im Bereich von 1 bis 10 mmol Aminogruppen pro Gramm Polymer. Dies entspricht einer Amin-Zahl im Bereich von 20 bis 1200 und vorzugsweise im Bereich von 60 bis 600 mg KOH/g Polymer. Beispiele für geeignete Aminogruppen enthaltende Polymere VP sind die Hydrierungsprodukte von Homo- und Copolymeren des Acrylnitrils und/oder des Methacrylnitrils mit beispielsweise Styrol und/oder Butadien.

Beispiele für Aminogruppen enthaltende Polymere VP sind die Hydrierungsprodukte von Copolymeren, die im wesentlichen aus 5 bis 50 Gew.-%, insbesondere 10 bis 30 Gew.-% Acrylnitril und/oder Methacrylnitril und 50 bis 95 Gew.-%, insbesondere 70 bis 90 Gew.-% Butadien und/oder Isopren aufgebaut sind.

Ein spezielles Beispiel hierfür sind die Hydrierungsprodukte von Copolymeren, die aus etwa 18 Gew.-% Acrylnitril, etwa 79,6 Gew.-% Butadien und etwa 2,4 Gew.-% Carboxylat-Endgruppen aufgebaut sind, wobei in dem Hydrierungsprodukt etwa 50 bis 95 % der Nitrilgruppen zum Amin hydriert wurden. Das Molekulargewicht dieser speziellen Hydrierungsprodukte liegt im Bereich von 2000 bis 10 000 Dalton und die Amin-Zahl im Bereich von 100 bis 200 mg KOH/g Polymer. Verfahren zur Herstellung der hydrierten Copolymere sind beispielsweise aus der US-A-2,456,428, der US-A-2,585,583, der US-A-3,122,526, den älteren deutschen Anmeldungen P 196 43 126.3 und P 197 02 103.4 bekannt. Insbesondere auf die letztgenannten Schriften wird hiermit in vollem Umfang Bezug genommen.

Erfindungsgemäß geeignet sind auch solche Aminogruppen enthaltenden Polymere VP, die durch radikalische Homo- oder Copolymerisation von hydrolysierbaren N-Vinylamiden wie N-Vinylformamid, N-Vinylacetamid, N-Vinylpropionamid, N-Vinylsuccinimid oder N-Vinylphthalimid und nachträgliche Hydrolyse der dabei erhaltenen Homo- oder Copolymere erhältlich sind. Derartige Homo- oder Copolymere sowie deren Hydrolysate sind aus dem Stand der Technik bekannt oder können in analoger Weise hergestellt werden (siehe z. B. Römpp, Chemielexikon, Vinylamin-Polymere und dort zit. Literatur sowie EP-A 71 050).

Als Aminogruppen enthaltende Polymere VP kommen auch Derivate von Polyvinylalkoholen in Frage, worin ein Teil oder alle OH-Gruppen durch aminierende Hydrierung in primäre Aminogruppen umgewandelt wurden. Als Ausgangsmaterialien dienen hierbei handelsübliche Polyvinylalkohole, wie sie beispielsweise aus Ullmann's Encyclopedia of Industrial Chemistry, 5th ed., Vol 21A, S. 743-747 bekannt sind, wobei Polyvinylalkohole mit einem Molekulargewicht im Bereich von 2000 bis 50 000 bevorzugt werden. Diese werden nach bekannten Verfahren (siehe z. B. DE-A-44 28 004, EP-A-382 049 und dort zit. Literatur) mit Wasserstoff und Ammoniak bei Temperaturen im Bereich von 80 bis 250 °C und Drücken bis 400 bar an oxidischen Übergangsmetallkatalysatoren, beispielsweise Cu-Oxid-, Ni-Oxid-, Co-Oxid-, Ru-Oxid-Katalysatoren, Mischoxid-Katalysatoren der vorgenannten Übergangsmetalle, die gegebenenfalls noch Oxide des Molybdän, Vanadium, Zirkon, Aluminium oder Silicium enthalten, z. B. Zr-Cu-Ni-Mo-Oxidkatalysatoren umgesetzt. Hierbei resultieren aminogruppenhaltige Polymere mit KOH-Zahlen im Bereich von 50 bis 500 mg KOH/g Polymer.

Erfindungsgemäß geeignete Aminogruppen enthaltende Polymere VP sind auch Polyalkylenimine wie Polyethylenimin. Derartige Polyethylenimine sind allgemein bekannt. Polyethylenimine mit Molekulargewichten $M_w$ im Bereich von 400 bis 2 000 000 sind beispielsweise unter der Bezeichnung Lupasol® der BASF Aktiengesellschaft erhältlich. Polyethylenimine bestehen in der Regel aus verzweigten Polymerketten und enthalten daher primäre, sekundäre und tertiäre Aminogruppen. Deren Verhältnis liegt üblicherweise bei 1:2:1. Bei niedrigeren Molekulargewichten, die erfindungsgemäß bevorzugt sind, findet man höhere Anteile primärer Aminogruppen. Weitgehend lineare Polyethylenimine, die über spezielle Herstellungsverfahren zugänglich sind, sind für die erfindungsgemäßen Zubereitungen ebenfalls bevorzugt. Besonders bevorzugte Alkylenimine weisen ein zahlenmittleres Molekulargewicht $M_n$ im Bereich von 400 bis 1400 Dalton auf. Beispiele hierfür sind Polyethylenimine der allgemeinen Formel $H_2N\text{-}(CH_2\text{-}CH_2\text{-}NH\text{-})_kCH_2\text{-}CH_2\text{-}NH_2$, worin k für eine Zahl im Bereich von 8 bis 30 steht. Polymere Alkylenimine mit primären und/oder sekundären Aminogruppen sind beispielsweise beschrieben in "Encyclopedia of Polymer Science and Engineering", H. Mark (ed.), rev. ed., Vol. 1, S. 680-739, John Wiley & Sons Inc. New York, 1985.

In der Regel wird das Molverhältnis der funktionellen Gruppen F in der vernetzend wirkenden Substanz zu den Anhydridgruppen AH im Polymer P1 im Bereich von 100:1 bis 1:10, vorzugsweise im Bereich von 20:1 bis 1:5, und insbesondere im Bereich von 10:1 bis 1:2 liegen. Bei niedermolekularen Verbindungen V liegt das molare Verhältnis F/AH vorzugsweise im Bereich von 20:1 bis 1:10, wobei das Molverhältnis F/AH von Diaminoverbindungen vorzugsweise im Bereich von 10:1 bis 1:10, insbesondere im Bereich von 5:1 bis 1:5 und speziell im Bereich von 2:1 bis 1:2 liegt. Vergleichbares gilt für Aminoalkohole und Aminosiloxane. Bei Dendrimer-Polyaminen wählt man das molare Verhältnis F/AH vorzugsweise im Bereich von 20:1 bis 1:5 und insbesondere im Bereich von 5:1 bis 1:2. Beim erfindungsgemäßen Einsatz von Polymeren VP wählt man das molare Verhältnis F/AH vorzugsweise im Bereich von 100:1 bis 1:5 und insbesondere im Bereich von 20:1 bis 1:2.

Je nach Gehalt an einpolymerisierten Anhydridgruppen im Polymer P1 und Konzentration der funktionellen Gruppen F pro Gewichtseinheit vernetzend wirkender Substanz wählt man in den erfindungsgemäßen Zubereitungen ein Gew. -Verhältnis von Polymer P1 zu vernetzend wirkender Substanz im Bereich von 2000:1 bis 5:1, insbesondere im Bereich von 1000:1 bis 20:1 und besonders bevorzugt im Bereich von 500:1 bis 50:1. Bei Einsatz von Verbindungen V mit wenigstens zwei Aminogruppen liegt das Gew. -Verhältnis von Polymer P1 zu Verbindung V vorzugsweise im Bereich von 2000:1 bis 20:1, insbesondere im Bereich von 1000:1 bis 50:1 und speziell im Bereich von 500:1 bis 100:1. Bei Einsatz von Polymeren VP als Vernetzer liegt das Gew. -Verhältnis von Polymer P1 zu Polymer VP vorzugsweise im Bereich von 1000:1 bis 5:1 und insbesondere im Bereich von 500:1 bis 20:1.

Ferner können die erfindungsgemäßen Zubereitungen auch von den Polymeren P1 verschiedene Polymere P2 enthalten, die wie die Polymere P1 in dispergierter Form vorliegen, jedoch im Unterschied zu den Polymeren P1 keine Anhydridgruppen enthalten. Bei den Polymeren P2 wird es sich in der Regel um solche Polymere handeln, die üblicherweise als Kaschierklebstoffe verwendet werden, z. B. die aus der EP-A 148 386, der WO 92/12 213, der EP-A 622 434 sowie die aus den älteren deutschen Patentanmeldungen P 196 49 383.8 und P 197 38 185.5 bekannten Polymerdispersionen. Der Anteil der Polymere P2 an der Gesamtmenge an Polymeren P1 und P2 wird in der Regel weniger als 50 Gew. -% und insbesondere weniger als 20 Gew.-% betragen.

Für die Stabilität der erfindungsgemäßen Zubereitungen ist es grundsätzlich von Vorteil, wenn die erfindungsgemäßen Zubereitungen wenigstens ein quartäres, nicht-polymerisierbares Ammoniumsalz enthalten. Üblicherweise handelt es sich hierbei um Salze der allgemeinen Formel III

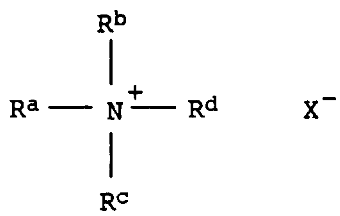
(III)

worin $R^a$, $R^b$, $R^c$ und $R^d$ unabhängig voneinander für $C_1$-$C_{18}$-Alkyl, Aryl oder Aralkyl stehen und $X^-$ ein Anionenäquivalent bedeutet.

Unter $C_1$-$C_{18}$-Alkyl versteht man hier lineares oder verzweigtes Alkyl, das gegebenenfalls auch OH-Gruppen oder Halogenidgruppen aufweisen kann. Beispiele für $C_1$-$C_{18}$-Alkyl sind Methyl, Ethyl, n-Propyl, Isopropyl, n-Butyl, n-Pentyl, n-Hexyl, n-Octyl, 2-Ethylhexyl, n-Decyl, Lauryl und Stearyl. Unter Aryl versteht man vorzugsweise Phenyl oder Naphthyl, das gegebenenfalls mit $C_1$-$C_4$-Alkyl oder Halogenid, z. B. Chlorid, substituiert sein kann. Aryl kann auch mit ethoxiliertem OH substituiert sein. Aralkyl ist Aryl, das über eine $C_1$-$C_4$-Alkyleneinheit, z. B. Methylen, 1,2-Ethylen, 1,1-Ethylen, 1,3-Propylen, gebunden ist. Bevorzugtes Aralkyl ist Phenylmethyl (= Benzyl) und Phenylethyl, wobei der Phenylrest auch in der oben beschriebenen Weise substituiert sein kann. Bevorzugt werden solche Salze der allgemeinen Formel III, worin höchstens einer der Reste $R^a$ bis $R^d$ und insbesondere keiner dieser Reste für Aryl oder Aralkyl steht. Ferner ist bevorzugt, wenn die Reste $R^a$ bis $R^d$ unter $C_1$-$C_{12}$-Alkyl und insbesondere unter $C_2$-$C_8$-Alkyl ausgewählt sind.

In Formel III ist $X^-$ vorzugsweise ausgewählt unter organischen Anionen wie Acetat, Toluolsulfonat, Benzolsulfonat, und anorganischen Anionen wie Halogenid, 1/2 $SO_4^{2-}$, 1/3 $PO_4^{3-}$, $HSO_4^-$, $ClO_4^-$, $BF_4^-$ oder $OH^-$. Vorzugsweise steht $X^-$ für ein anorganisches Anion, insbesondere für Halogenid und hierunter besonders bevorzugt für Chlorid oder Bromid. Beispiele für besonders bevorzugte Salze der allgemeinen Formel III sind Benzyltriethylammoniumsalze, Tetra-n-butylammoniumsalze, Tetraethylammoniumsalze, z. B. die Chloride, Bromide, Sulfate, Hydrogensulfate und Perchlorate.

Sofern erwünscht, enthalten die erfindungsgemäßen Zubereitungen vorzugsweise 0,1 bis 10 Gew.-%, insbesondere 0,2 bis 5 Gew.-%, bezogen auf das Gesamtgewicht der Zubereitung, wenigstens ein quartäres, nicht-polymerisierbares Ammoniumsalz der allgemeinen Formel III.

Die erfindungsgemäßen Zubereitungen können auch in untergeordneter Menge organische Lösungsmittel enthalten. Geeignete Lösungsmittel sind solche, die mit der Anhydrideinheit des Copolymeren P keine Reaktion eingehen. Hierzu zählen sowohl mit Wasser mischbare Lösungsmittel wie cyclische Ether, z. B. Tetrahydrofuran, Dioxan, Amide wie Acetamid, N,N-Dimethylformamid, N,N-Dimethylacetamid, N-Methylpyrrolidon, Dialkylether von Diethylenglykol, Triethylenglykol oder Tetraethylenglykol, z. B. Diethylenglykolbismethylether. Hierzu zählen auch mit Wasser nicht mischbare Lösungsmittel, beispielsweise Kohlenwasserstoffe oder Kohlenwasserstoffgemische, z. B. Toluol, Hexan, Cyclohexan, Testbenzin, ferner aliphatische Ether, z. B. Diethylether, t.-Butylmethylether etc. Vorzugsweise enthält die erfindungsgemäße, wässrige Zubereitung nicht mehr als 50 Gew.-%, insbesondere nicht mehr als 20 Gew.-%, besonders bevorzugt nicht mehr als 10 Gew.-%, ganz besonders bevorzugt nicht mehr als 5 Gew.-% und speziell gar kein organisches Lösungsmittel, bezogen auf die Gesamtmenge an Wasser und organischem Lösungsmittel.

Die Herstellung der Zubereitungen, die eine vernetzend wirkende Substanz enthalten, erfolgt in der Regel durch Vermischen der wässrigen Dispersion des Polymeren P1 und der vernetzend wirkenden Substanz bei Raumtemperatur oder erhöhter Temperatur, vorzugsweise jedoch unterhalb 50 °C. Vorzugsweise wird die wässrige Dispersion des Polymeren P1, die herstellungsbedingt häufig einen sauren pH-Wert aufweist, vor der erfindungsgemäßen Verwendung mit einer Base, z. B. Natriumhydrogencarbonat, Natriumcarbonat, Kaliumhydrogencarbonat oder Kaliumcarbonat, neutralisiert, vorzugsweise auf pH-Werte im Bereich von 5 bis 9, insbesondere 6 bis 8. Selbstverständlich können auch andere Basen zur Neutralisation eingesetzt werden. Vorzugsweise werden keine Amine für die Neutralisation eingesetzt. Enthält die Zubereitung eine vernetzend wirkende Substanz, die als funktonelle Gruppen F Aminogruppen aufweist, erfolgt die Neutralisation vorzugsweise vor deren Zugabe.

Die erfindungsgemäßen Zubereitungen werden erfindungsgemäß als Kaschierklebstoff zum Verkleben von großflächigen Substraten, d.h. zur Herstellung von Laminaten verwendet.

Die Zubereitung kann für die Verwendung als Kaschierklebstoff weitere übliche Zusatzstoffe, z.B. Netzmittel, Verdicker, Schutzkolloide, Lichtschutzstabilisatoren, Biozide enthalten. Die erfindungsgemäße Zubereitung benötigt nicht den Zusatz von weichmachenden Harzen (Tackifiern) oder von anderen Weichmachern.

Bei der Verwendung als Kaschierklebstoff wird die erfindungsgemäße Dispersion auf die großflächigen Substrate vorzugsweise mit einer Schichtdicke von 0,1 bis 20, besonders bevorzugt 1 bis 7 $g/m^2$ z.B. durch Rakeln, Streichen etc. aufgetragen. Nach kurzer Zeit zur Ablüftung des Dispersionswassers (vorzugsweise nach 1 bis 60 Sekunden) kann das beschichtete Substrat dann mit einem zweiten Substrat kaschiert werden, wobei die Temperatur z.B. 20 bis 200, vorzugsweise 20 bis 100 °C und der Druck z.B. 100 bis 3000, vorzugsweise 300 bis 2000 $kN/m^2$ betragen kann.

Als Substrate eignen sich z.B. Polymerfolien, insbesondere aus Polyethylen, orientiertem Polypropylen, Polyamid, Polyethylenterephthalat, Polyacetat, Zellglas, mit Metall (z.B. Aluminium beschichtete (bedampfte) Polymerfolien (kurz: metallisierte Folien) oder auch Papier, Karton oder Metallfolien, z.B. aus Aluminium. Die genannten Folien können auch z.B. mit Druckfarben bedruckt sein.

Die erfindungsgemäßen Zubereitungen werden insbesondere als Klebstoff für die Glanzfolienkaschierung und besonders bevorzugt als Klebstoff für die Verbundfolienkaschierung verwendet. Bei der Glanzfolienkaschierung werden Papier oder Karton mit transparenten Polymerfolien verklebt. Bei der Verbundfolienkaschierung können die obengenannten Substrate (jedoch kein Papier oder Karton), z.B. unterschiedliche Polymerfolien, miteinander verklebt werden.

Die vorliegende Erfindung betrifft somit auch ein Verfahren zum Verkleben großflächiger Substrate unter Einsatz der erfindungsgemäßen Zubereitungen als Klebstoffe als auch die nach diesem Verfahren erhältlichen Laminate.

Es ist ein Vorteil der Erfindung, daß unterschiedlichste Substrate miteinander verklebt, d.h. kaschiert werden können, wobei die erfindungsgemäßen Zubereitungen eine gute Haftung an den Substraten aufweisen und eine hohe Festigkeit des verklebten Verbundes bewirken. Die erfindungsgemäß erhältlichen Laminate zeichnen sich durch eine besonderes gute Stabilität der Verklebung aus, die auch bei mechanischer Belastung des Laminats, z.B. bei Nutung gegeben ist.

Beispiele

I. Herstellung der Polymere P1 als wäßrige Dispersionen D1, D2 und VD1

In einem Polymerisationsreaktor wurden 250 g entionisiertes Wasser und 3 g einer 33 gew. -%igen wäßrigen Polystyroldispersion (mittlerer Polymerteilchendurchmesser ca. 30 nm) vorgelegt und auf 85 °C erwärmt. Anschließend gab man zeitgleich beginnend über getrennte Zuläufe eine wässrige Monomeremulsion und eine wäßrige Initiatorlösung innerhalb 2 h unter Beibehaltung der Temperatur in den Reaktor, wobei zuerst 5 % der Initiatorlösung innerhalb 5 min und anschließend die restliche Initiatorlösung innerhalb 1 h 55 min zugegeben wurden. Anschließend polymerisierte man weitere 0,5 h bei 85 °C.

Die erhaltene Dispersion wurde filtriert und wies einen Feststoffgehalt von 54,6 Gew.-% und einen pH Wert von 2,2 auf.

Die Initiatorlösung enthielt 3 g Natriumperoxodisulfat, gelöst in 117 g entionisiertem Wasser. Die Monomeremulsion enthielt 1000 g Monomere, 440 g Wasser, 20 g einer 15 gew.-%igen, wässrigen Natriumlaurylsulfat-Lösung und 16,7 g einer wässrigen, 60 gew. -%igen Lösung des Natriumsalzes des Bis(2-ethylhexyl)esters der Sulfobernsteinsäure. Die Monomerzusammensetzung ist in Tabelle 1 angegeben.

Tabelle 1

| Disper-sion | n-BuA | MMA | Styrol | MASA | AS | $T_G$ (Fox) °C |
|---|---|---|---|---|---|---|
| D1 | 730 | 200 | - | 50 | 20 | - 0,6 |
| D2 | 710 | 200 | - | 70 | 20 | + 3,5 |
| VD1 | 780 | 200 | - | - | 20 | -10,8 |
| n-BuA = n-Butylacrylat, MMA = Methylmethacrylat, MASA = Methacrylsäureanhydrid, AS = Acrylsäure<br>$T_G$ = Glasübergangstemperatur, berechnet nach Fox | | | | | | |

Herstellung der Dispersion D3

In einem Polymerisationsreaktor wurden 375 g entionisiertes Wasser und 15 g einer 10 gew. -%igen wäßrigen Polystyroldispersion (mittlerer Polymerteilchendurchmesser ca. 30 nm) vorgelegt und auf 85 °C erwärmt. Anschließend gab man zeitgleich beginnend über getrennte Zuläufe eine wässrige Monomeremulsion und eine wäßrige Initiatorlösung innerhalb 3 h unter Beibehaltung der Temperatur in den Reaktor, wobei zuerst 5 % der Initiatorlösung innerhalb 5 min und anschließend die restliche Initiatorlösung innerhalb 2 h 55 min zugegeben wurden. Anschließend polymerisierte man weitere 0,5 h bei 85 °C.

Die erhaltene Dispersion wurde filtriert und wies einen Feststoffgehalt von 55,3 Gew.-% und einen pH Wert von 2,1 auf. Die nach Fox berechnete Glasübergangstemperatur liegt bei -8,8 °C.

Die Initiatorlösung enthielt 4,5 g Natriumperoxodisulfat, gelöst in 175,5 g entionisiertem Wasser. Die Monomeremulsion enthielt 610 g Wasser, 1155 g n-Butylacrylat, 300 g Methylmethacrylat, 15 g Methacrylsäureanhydrid 30 g Acrylsäure, 30 g einer 15 gew.-%igen, wässrigen Natriumlaurylsulfat-Lösung und 30 g einer wässrigen, 60 gew. -%igen Lösung des Natriumsalzes des Bis(2-ethylhexyl) esters der Sulfobernsteinsäure.

Herstellung der Dispersion D4

1370 g Dispersion D3 wurden mit Natriumcarbonat auf pH 6,4 eingestellt und anschließend unter Rühren mit 4,32 g 1, 10-Diamino-4, 7-dioxadecan gemischt.

II. Anwendungstechnische Prüfung der Dispersionen D1 - D4 und VD1

Alle Dispersionen wurden vor ihrer Benutzung mit Natriumcarbonat auf pH 6,4 neutralisiert.

Handelsübliche Polypropylenfolien (einseitig Corona-vorbehandelt, d = 0, 0012 mm, Hersteller 4-P-Folie Forchheim, D-91301 Forchheim) oder handelsübliche Celluloseacetatfolien (Hersteller Putz-Folien GmbH&Co., D-65232 Taunusstein-Wehen) wurden mit den neutralisieten Dispersionen beschichtet (Trockenauftrag etwa 8 bis 10 $g/m^2$). Nach Trocknen mit Kaltluft wurde ein handelsüblicher, farbig beschichteter Karton (Cromoduplex-Karton, Hersteller BASF AG, D-67056 Ludwigshafen) aufgelegt und mit einer Laborkaschierrolle angerollt. Die zugeschnittenen Kaschierungen wurden mit einem Druck von 650 $kN/m^2$ in einer Rollenpresse mit 5 m/min bei 70 °C verpresst.

Die Haftung des Klebstoffs auf dem Karton bzw. der Folie wurde durch Abziehen der Folie in einem Winkel von etwa 180° geprüft.

Auswertung:

1 = sehr hohe Haftung, vollständiger Papier- oder Farbausriss
2 = hohe Haftung, teilweiser Papier- oder Farbausriss
3 = gute Haftung mit Adhäsionsbruch Karton oder Folie (AK bzw. AF)
4 = schwache Haftung mit AK oder AF
5 = Keine Haftung auf Karton oder Folie

Zur Bestimmung der Nutstandfestigkeit wurden die kaschierten Proben 24 h nach der oben beschriebenen Herstellung genutet. Es wurde die Nutung nach einer Skala von 1 bis 4 bewertet:

1 = Nut vollständig in Ordnung
2 = Nut an vereinzelten Stellen leicht geöffnet
3 = Nut an einzelnen Stellen deutlich geöffnet
4 = Nut vollständig offen

Die Ergebnisse für Corona-vorbehandelte Polypropylenfolie sind in Tabelle 4 zusammengefasst. Die Ergebnisse für Celluloseacetatfolie sind in Tabelle 5 zusammengefasst.

Tabelle 4

| (Polypropylenfolie) | | | | | | |
|---|---|---|---|---|---|---|
| | Haftung | | | Nutung | | |
| | n. 24h | n. 1 Wo. | n. 6 Wo. | n. 24 h | n. 1 Wo. | n. 6 Wo. |
| D1 | 2 | n.b. | n.b. | 2 | n.b. | n.b. |
| VD1 | 1 | n.b. | n.b. | 4 | n.b. | n.b. |
| D2 | 1 | 2 | n.b. | 1 | n.b. | n.b. |
| D3 | 3 AK | 3 AK | 3 AK | 2 | 2 | 2-3 |
| D4 | 3 AK | 2-3 | 2-3 | 1 | 1 | 2-3 |

Tabelle 5

| (Celluloseacetatfolie) | | | | | | |
|---|---|---|---|---|---|---|
| | Haftung | | | Nutung | | |
| | n. 24h | n. 1 Wo. | n. 6 Wo. | n. 24 h | n. 1 Wo. | n. 6 Wo. |
| D1 | 2 | n.b. | n.b. | 3 | n.b. | n.b. |
| VD1 | 1 | n.b. | n.b. | 4 | n.b. | n.b. |
| D2 | 2 | 1-2 | 1-2 | 1 | 2 | 2 |
| D3 | 3 AK | 3 AK | | 3 | n.b. | n.b. |
| D4 | 3 AK/AF | 3 AK/AF | 3 AK/AF | 1 | 2 | 3 |

n.b. = nicht beobachtet

**Patentansprüche**

**1.** Verwendung von wässrigen Zubereitungen, die wenigstens ein dispergiertes Polymer P1 enthalten, das aus ethylenisch ungesättigten Monomeren M aufgebaut ist, wobei die Monomere M

0,1 bis 20 Gew.-% wenigstens eines Monomers M1, ausgewählt unter den Anhydriden monoethylenisch ungesättigter Monocarbonsäuren mit 3 bis 8 C-Atomen und Itaconsäureanhydrid,

80 bis 99,9 Gew.-% wenigstens eines hydrophoben Monomers M2 mit einer Wasserlöslichkeit < 60 g/l (bei 25 °C und 1 bar) und gegebenenfalls

0 bis 19,9 Gew.-% eines oder mehrerer Monomere M3 mit einer Wasserlöslichkeit > 60 g/l (bei 25 °C und 1 bar)

umfassen und wobei die Anteile der Monomere M1 bis M3 auf 100 Gew. -% Monomere M bezogen sind, als Klebstoffe für die Herstellung von Laminaten.

2. Verwendung nach Anspruch 1, dadurch gekennzeichnet, daß die Monomere M2

   i. wenigstens ein Monomer M2a, ausgewählt unter den Estern der Methacrylsäure mit $C_1$- bis $C_{12}$-Alkanolen und den vinylaromatischen Monomeren, und

   ii. wenigstens ein Monomer M2b, ausgewählt unter den Estern der Acrylsäure mit $C_1$- bis $C_{12}$-Alkanolen, umfassen.

3. Verwendung nach einem der vorhergehenden Ansprüche, wobei die Monomere M3 ausgewählt sind unter monoethylenisch ungesättigten Carbonsäuren, monoethylenisch ungesättigten Sulfonsäuren und den Salzen dieser Säuren.

4. Verwendung nach einem der vorhergehenden Ansprüche, wobei die Zubereitung wenigstens eine vernetzend wirkende Substanz, ausgewählt unter niedermolekularen Verbindungen V mit wenigstens zwei funktionellen Gruppen F pro Molekül und Polymeren VP mit mehreren funktionellen Gruppen F enthält, wobei die funktionellen Gruppen F mit den Anhydridgruppen AH des Polymers P1 unter Bindungsbildung reagieren können.

5. Verwendung nach Anspruch 4, wobei die vernetzend wirkende Substanz ausgewählt ist unter Verbindungen V die als funktionelle Gruppe F wenigstens eine primäre oder sekundäre Aminogruppe aufweist.

6. Verwendung nach Anspruch 5, wobei die niedermolekulare Verbindung V ausgewählt ist unter in Wasser löslichen Verbindungen mit wenigstens zwei primären Aminogruppen.

7. Verfahren zur Herstellung von Laminaten durch Verkleben von großflächigen Substraten, dadurch gekennzeichnet, daß als Klebstoff eine wässrige Zubereitung gemäß einem der vorhergehenden Ansprüche eingesetzt wird.

8. Verfahren nach Anspruch 7, dadurch gekennzeichnet, daß Papier oder Karton mit einer transparenten Polymerfolie verklebt wird.

9. Laminate, erhältlich durch ein Verfahren gemäß einem der Ansprüche 7 oder 8.

10. Wässrige Zubereitung, enthaltend:

   i. wenigstens ein dispergiertes Polymer P1, das aus ethylenisch ungesättigten Monomeren M aufgebaut ist, wobei die Monomere M

      0,1 bis 20 Gew.-% wenigstens eines Monomers M1, ausgewählt unter den Anhydriden monoethylenisch ungesättigter Monocarbonsäuren mit 3 bis 8 C-Atomen und Itaconsäureanhydrid,

      80 bis 99,9 Gew.-%wenigstens eines hydrophoben Monomers M2 mit einer Wasserlöslichkeit < 60 g/l (bei 25 °C und 1 bar) und gegebenenfalls

      0 bis 19,9 Gew.-% eines oder mehrerer Monomere M3 mit einer Wasserlöslichkeit > 60 g/l (bei 25 °C und 1 bar)

      umfassen und wobei die Anteile der Monomere M1 bis M3 auf 100 Gew. -% Monomere H bezogen sind, und

   ii. wenigstens eine vernetzend wirkende Substanz, ausgewählt unter niedermolekularen Verbindungen V mit wenigstens zwei funktionellen Gruppen F pro Molekül und Polymeren VP mit mehreren funktionellen Gruppen F, wobei die funktionellen Gruppen F mit den Anhydridgruppen AH des Polymers P1 unter Bindungsbildung reagieren können.

11. Zubereitung nach Anspruch 10, wobei die vernetzend wirkende Substanz ausgewählt ist unter Verbindungen V die als funktionelle Gruppe F wenigstens eine primäre oder sekundäre Aminogruppe aufweist.

12. Zubereitung nach Anspruch 11, wobei die niedermolekulare Verbindung V ausgewählt ist unter in Wasser löslichen Verbindungen mit wenigstens zwei primären Aminogruppen.

Europäisches Patentamt

# EUROPÄISCHER RECHERCHENBERICHT

Nummer der Anmeldung
EP 99 10 7507

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| P,X | EP 0 900 651 A (BASF AG)<br>10. März 1999 (1999-03-10)<br>* Absatz '0011! *<br>* Absatz '0049!; Ansprüche; Beispiele * | 1-4,7-10 | C09J133/06<br>C09J135/00<br>C08K5/00<br>B32B7/12 |
| X | EP 0 825 202 A (ROHM & HAAS)<br>25. Februar 1998 (1998-02-25)<br>* Ansprüche; Beispiel 8 * | 10-12 | |
| D,A | EP 0 622 434 A (WACKER CHEMIE GMBH)<br>2. November 1994 (1994-11-02)<br>* Ansprüche * | 1-12 | |

RECHERCHIERTE SACHGEBIETE (Int.Cl.6)
C09J
C08K
B32B

Der vorliegende Recherchenbericht wurde für alle Patentansprüche erstellt

| Recherchenort | Abschlußdatum der Recherche | Prüfer |
|---|---|---|
| DEN HAAG | 21. Juli 1999 | DE LOS ARCOS, E |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 99 10 7507

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-07-1999

| Im Recherchenbericht angeführtes Patentdokument | Datum der Veröffentlichung | Mitglied(er) der Patentfamilie | Datum der Veröffentlichung |
|---|---|---|---|
| EP 0900651 A | 10-03-1999 | DE 19738185 A | 04-03-1999 |
| EP 0825202 A | 25-02-1998 | AU 3326497 A | 26-02-1998 |
| | | BR 9704428 A | 22-12-1998 |
| | | CA 2212969 A | 20-02-1998 |
| | | CN 1176260 A | 18-03-1998 |
| | | JP 10087728 A | 07-04-1998 |
| EP 0622434 A | 02-11-1994 | DE 4306822 A | 08-09-1994 |
| | | DE 59400006 D | 17-08-1995 |
| | | ES 2074928 T | 16-09-1995 |
| | | FI 940768 A | 05-09-1994 |
| | | JP 2670976 B | 29-10-1997 |
| | | JP 6322343 A | 22-11-1994 |
| | | US 5474638 A | 12-12-1995 |

EPO FORM P0461

Für nähere Einzelheiten zu diesem Anhang : siehe Amtsblatt des Europäischen Patentamts, Nr.12/82